# EUROPÄISCHE PATENTANMELDUNG

(11) **EP 3 882 071 A1**
(43) Veröffentlichungstag der Anmeldung: **22.09.2021**
(21) Anmeldenummer: 21158859.5
(22) Anmeldetag: 24.02.2021
(51) Int. Cl.: B60L 58/22, B60L 50/53, B60L 50/60, B60L 1/00, B60L 3/00, B60L 15/32

(54) **FAHRZEUG, INSBESONDERE SCHIENENFAHRZEUG**

(30) Priorität: 16.03.2020 DE 102020203349
(71) Anmelder: Siemens Mobility GmbH, 81739 München (DE)
(72) Erfinder: Baloche, Caroline, 91058 Erlangen (DE); Eckert, Peter, 91058 Erlangen (DE); Rengers, Nils, 90459 Nürnberg (DE)

(57) **Zusammenfassung**

Die Erfindung bezieht sich auf ein Fahrzeug, insbesondere Schienenfahrzeug (10), mit zumindest zwei Traktionszweigen (20, 20a), die jeweils einen Antrieb (21) und einen Energiespeicher (22) umfassen, und zumindest einer elektrischen Last (40) .

Erfindungsgemäß ist vorgesehen, dass die zumindest eine elektrische Last (40) mit den Energiespeichern (22) der zumindest zwei Traktionszweige (20, 20a) über eine elektrische Symmetriereinrichtung (30) verbunden ist, wobei die Symmetriereinrichtung (30) derart ausgestaltet ist, dass sie im Falle unterschiedlicher Klemmenspannungen (U1, U2) der Energiespeicher (22) der zumindest zwei Traktionszweige (20, 20a) die elektrische Last (40) mit einem der zumindest zwei Traktionszweige (20, 20a) verbindet und von dem anderen der zumindest zwei Traktionszweige (20, 20a) trennt sowie Ausgleichsströme zwischen den zumindest zwei Traktionszweigen (20, 20a) unterbindet.

## Beschreibung

Die Erfindung bezieht sich auf Fahrzeuge, insbesondere Schienenfahrzeuge, mit zumindest zwei Traktionszweigen, die jeweils einen Antrieb und einen Energiespeicher umfassen, und zumindest einer elektrischen Last.

Fahrzeuge der oben beschriebenen Art können als elektrische Last beispielsweise ein elektrisches Bordnetz aufweisen, an das ein oder mehrere elektrische Verbraucher angeschlossen sind. Das Speisen des Bordnetzes und der elektrischen Verbraucher erfolgt bei vorbekannten Schienenfahrzeugen über einen fest vorgegebenen Traktionszweig.

Der Erfindung liegt die Aufgabe zugrunde, ein Fahrzeug der oben beschriebenen Art mit Blick auf ein Speisen der elektrischen Last zu verbessern.

Diese Aufgabe wird erfindungsgemäß durch ein Fahrzeug mit den Merkmalen gemäß Patentanspruch 1 gelöst. Vorteilhafte Ausgestaltungen des erfindungsgemäßen Fahrzeugs sind in Unteransprüchen angegeben.

Danach ist erfindungsgemäß vorgesehen, dass die zumindest eine elektrische Last mit den Energiespeichern der zumindest zwei Traktionszweige über eine elektrische Symmetriereinrichtung verbunden ist, wobei die Symmetriereinrichtung derart ausgestaltet ist, dass sie im Falle unterschiedlicher Klemmenspannungen der Energiespeicher der zumindest zwei Traktionszweige die elektrische Last mit einem der zumindest zwei Traktionszweige verbindet und von dem anderen der zumindest zwei Traktionszweige trennt sowie Ausgleichsströme zwischen den zumindest zwei Traktionszweigen unterbindet.

Ein wesentlicher Vorteil des erfindungsgemäßen Fahrzeugs ist darin zu sehen, dass durch die erfindungsgemäß vorgesehene Symmetriereinrichtung eine Redundanz in der Energieversorgung erreicht wird, da stets sichergestellt ist, dass unabhängig von aktuellen Klemmenspannungen der Traktionszweige oder selbst bei Ausfall eines der Traktionszweige eine Versorgung der elektrischen Last gewährleistet wird. Ausgleichs- bzw. Kurzschlussströme zwischen den Traktionszweigen im Falle unterschiedlicher Spannungsniveaus werden dabei verhindert, sodass die Gefahr einer Zerstörung der Energiespeicher der Traktionszweige in vorteilhafter Weise minimiert wird.

Als besonders vorteilhaft wird es angesehen, wenn die Symmetriereinrichtung im Falle unterschiedlicher Klemmenspannungen der Energiespeicher der zumindest zwei Traktionszweige die elektrische Last mit der Energie desjenigen Energiespeichers versorgt, der die größte Klemmenspannung von den Energiespeichern der zumindest zwei Traktionszweige aufweist, und im Falle einer gleichgroßen Klemmenspannung der Energiespeicher der zumindest zwei Traktionszweige die elektrische Last parallel mit der Energie der Energiespeicher jedes der genannten zumindest zwei Traktionszweige versorgt. Bei dieser letztgenannten vorteilhaften Ausgestaltung kommt es ausschließlich dann, wenn die Klemmenspannungen der zumindest zwei Traktionszweige gleich bzw. identisch sind, zu einem Verbinden der elektrischen Last mit beiden Traktionszweigen. Durch die Symmetriereinrichtung wird während des Betriebs dabei eine automatische Symmetrierung der Traktionszweige hinsichtlich der Klemmenspannungen erreicht, da eine elektrische Belastung durch die elektrische Last auf jeweils den Traktionszweig verlagert wird, der die größere Klemmenspannung hat. Kommt es zu einer Veränderung der Klemmenspannungen, so erfolgt automatisch ein Umschalten. Nur im Falle gleicher Klemmenspannungen werden bei dieser bevorzugten Ausgestaltung beide Traktionszweige zur Speisung herangezogen, wodurch die Gefahr durch Ausgleichsströme zwischen den Traktionszweigen minimiert bleibt.

Die Symmetriereinrichtung ist vorzugsweise eine passive, selbsttätig arbeitende Symmetriereinrichtung.

Als vorteilhaft wird es angesehen, wenn die Symmetriereinrichtung zwischen jedem der zumindest zwei Traktionszweige und der elektrischen Last jeweils zumindest eine Diode aufweist, die vom Traktionszweig in Richtung Last gesehen in Flussrichtung gepolt ist. Die oben beschriebene Kopplung und Entkopplung der Traktionszweige lässt sich durch die traktionszweigeigenen Diode (mit der beschriebenen Polung) in besonders einfacher Weise und mit minimalem Teileaufwand erreichen.

Die Kathoden der Dioden sind vorzugsweise elektrisch verbunden; aufgrund der Polung werden Ausgleichsströme zwischen den Traktionszweigen automatisch bzw. diodenseitig blockiert.

Mit Blick auf ein etwaiges Versagen der Sperrfähigkeit einer oder mehrerer Dioden wird es als vorteilhaft angesehen, wenn zwischen jedem Paar miteinander verbundener Kathoden jeweils zumindest eine elektrische Sicherung angeordnet ist. Die elektrische Sicherung ist vorzugsweise eine Schmelzsicherung oder eine pyrotechnische Sicherung.

Mit Blick auf ein etwaiges Versagen der Sperrfähigkeit einer oder mehrerer Dioden wird es - alternativ oder zusätzlichals vorteilhaft angesehen, wenn die Symmetriereinrichtung zwischen jedem der zumindest zwei Traktionszweige und der elektrischen Last jeweils eine Diodenreihenschaltung aufweist, die zumindest zwei in Reihe geschaltete Dioden umfasst und vom jeweiligen Traktionszweig in Richtung Last gesehen in Flussrichtung gepolt ist. Durch Diodenreihenschaltungen kann in einfacher Weise erreicht werden, dass bei Versagen der Sperrfähigkeit einer oder mehrerer Dioden die Trennung der Traktionszweige dennoch erhalten bleibt.

Auch ist es vorteilhaft, wenn die Symmetriereinrichtung eine Überwachungseinrichtung aufweist, die im Falle eines Versagens einer der Dioden der Diodenreihenschaltungen ein Warnsignal erzeugt. Liegt ein Warnsignal vor, kann rechtzeitig ein Diodenwechsel der betroffenen Dioden vorgenommen werden.

Alternativ oder zusätzlich kann vorgesehen sein, dass die Symmetriereinrichtung für jeden der zumindest zwei Traktionszweige jeweils einen Schalter, der in geschlossener Schalterstellung den zugeordneten Traktionszweig mit der elektrischen Last verbindet und in offener Schalterstellung von dieser trennt, und eine Steuereinrichtung, die die Schalterstellung der Schalter in Abhängigkeit von den Klemmenspannung der Energiespeicher steuert, umfasst.

Die Steuereinrichtung ist vorzugsweise derart ausgestaltet, dass im Falle einer unterschiedlichen Klemmenspannung der Energiespeicher der zumindest zwei Traktionszweige durch Umschalten der Schalter die elektrische Last mit demjenigen Energiespeicher verbunden wird, der die größte Klemmenspannung von den Energiespeichern der zumindest zwei Traktionszweige aufweist.

Die Steuereinrichtung ist - alternativ oder zusätzlich - vorzugsweise derart ausgestaltet, dass im Falle einer gleichgroßen Klemmenspannung der Energiespeicher der zumindest zwei Traktionszweige durch Einschalten zweier oder mehr Schalter der Symmetriereinrichtung die elektrische Last parallel mit dem Energiespeicher jedes der genannten zumindest zwei Traktionszweige verbunden wird.

Die elektrische Last kann zwei oder mehr elektrische Verbraucher aufweisen oder durch zwei oder mehr elektrische Verbraucher gebildet sein.

Vorteilhaft ist es, wenn die elektrische Last ein elektrisches Bordnetz umfasst, an das ein oder mehr elektrische Verbraucher angeschlossen sind.

Der Energiespeicher eines oder mehrerer der Traktionszweige kann zwei oder mehr Subenergiespeicher umfassen.

Das Fahrzeug kann mehrgliedrig sein und zwei oder mehr Wagen umfassen.

Die zumindest zwei Traktionszweige sind vorzugsweise in unterschiedlichen Wagen des Fahrzeugs untergebracht.

Der Energiespeicher eines oder mehrerer der Traktionszweige kann zwei oder mehr Subenergiespeicher umfassen, die in unterschiedlichen Wagen des Fahrzeugs untergebracht sind.

Einer der zumindest zwei Traktionszweige ist vorzugsweise im vordersten Wagen oder zumindest auch im vordersten Wagen untergebracht

Ein anderer der zumindest zwei Traktionszweige ist vorzugsweise im hintersten Wagen oder zumindest auch im hintersten Wagen untergebracht.

Die elektrische Last ist vorzugsweise in einem oder mehreren der mittleren Wagen oder zumindest auch in einem oder mehreren der mittleren Wagen angeordnet.

Die Erfindung wird nachfolgend anhand von Ausführungsbeispielen näher erläutert; dabei zeigen beispielhaft:
- Figur 1: in einer schematischen Ansicht Bestandteile eines Ausführungsbeispiels für ein eingliedriges Schienenfahrzeug, das mit einer Symmetriereinrichtung ausgestattet ist,
- Figur 2: in einer schematischen Ansicht Bestandteile eines Ausführungsbeispiels für ein mehrgliedriges Schienenfahrzeug, das mit einer Symmetriereinrichtung ausgestattet ist,
- Figur 3: eine Variante des Schienenfahrzeugs gemäß Figur 2 mit über Wagen verteilten Subenergiespeichern,
- Figur 4: eine Variante des Schienenfahrzeugs gemäß Figur 2 mit zusätzlicher elektrischer Sicherung,
- Figur 5: eine Variante des Schienenfahrzeugs gemäß Figur 2 mit Diodenreihenschaltungen,
- Figur 6: eine Variante des Schienenfahrzeugs gemäß Figur 2 mit Diodenreihenschaltungen und Überwachungseinrichtung,
- Figur 7: eine Variante des Schienenfahrzeugs gemäß Figur 2 mit Schaltern und Steuereinrichtung.

In den Figuren werden der Übersicht halber für identische oder vergleichbare Komponenten stets dieselben Bezugszeichen verwendet.

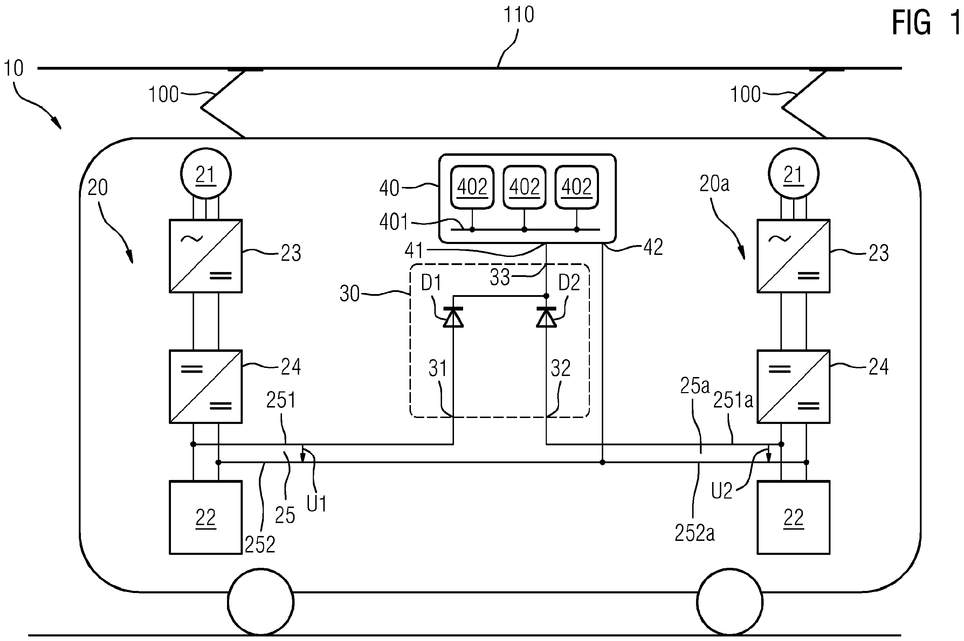

Die Figur 1 zeigt ein Ausführungsbeispiel für ein eingliedriges Schienenfahrzeug 10, das mit einem Traktionszweig 20 ausgestattet ist. Der Traktionszweig 20 umfasst einen Antrieb 21, der einen oder mehrere in der Figur 1 aus Gründen der Übersicht nicht gezeigte Antriebsmotoren aufweisen kann, und einen Energiespeicher 22. Der Energiespeicher 22 kann ein elektrischer Speicher, beispielsweise in Form einer Batterie sein; alternativ oder zusätzlich kann der Energiespeicher 22 auch andere Speicherformen umfassen und beispielsweise eine Brennstoffzelle aufweisen oder durch eine solche gebildet sein.

Der Traktionszweig 20 weist darüber hinaus einen Wechselrichter 23 und einen DC/DC-Wandler 24 auf, die den Antrieb 21 mit dem Energiespeicher 22 verbinden. Zwischen dem DC/DC-Wandler 24 und dem Energiespeicher 22 bildet der Traktionszweig 20 einen Gleichspannungszwischenkreis, der mit den Bezugszeichen 25 gekennzeichnet ist. Die zwischen einem ersten Anschluss 251 und einem zweiten Anschluss 252 des Gleichspannungszwischenkreises 25 anliegende Klemmenspannung ist mit dem Bezugszeichen U1 gekennzeichnet.

Das Schienenfahrzeug 10 gemäß Figur 1 weist darüber hinaus einen oder mehrere weitere Traktionszweige auf, von denen aus Gründen der Übersicht in der Figur 1 nur ein einziger weiterer gezeigt und mit dem Bezugszeichen 20a gekennzeichnet ist. Der weitere Traktionszweig 20a umfasst einen Antrieb 21, einen Energiespeicher 22, einen Wechselrichter 23 und einen DC/DC-Wandler 24. Die obigen Ausführungen im Zusammenhang mit dem Traktionszweig 20 gelten für den weiteren Traktionszweig 20a vorzugsweise entsprechend; die beiden Traktionszweige 20 und 20a können beispielsweise baugleich oder zumindest bauähnlich sein.

Die Traktionszweige 20 und 20a können über einen oder mehrere Stromabnehmer 100 - beispielsweise über nicht weiter gezeigte Transformatoren - von einem streckenseitigen Energieversorgungsnetz 110 gespeist werden, beispielsweise um die Energiespeicher 22 zu laden; dies ist jedoch aus Gründen der Übersicht in den Figuren nicht weiter gezeigt.

Der in der Figur 1 obere, erste Anschluss 251 des Gleichspannungszwischenkreises 25 des Traktionszweigs 20 steht über eine Symmetriereinrichtung 30 mit einem Anschluss 41 einer elektrischen Last 40 in Verbindung. Die Symmetriereinrichtung 30 verbindet darüber hinaus den ersten Anschluss 41 der elektrischen Last 40 mit den in der Figur 1 oberen, ersten Anschluss 251a eines von dem weiteren Traktionszweig 20a gebildeten weiteren Gleichspannungszwischenkreises 25a.

Wie weiter unten noch näher erläutert wird, verbindet die Symmetriereinrichtung 30 den ersten Anschluss 41 der elektrischen Last 40 mit nur einem oder beiden der Anschlüsse 251 bzw. 251a der beiden Gleichspannungszwischenkreise 25 bzw. 25a, oder mit beiden, und zwar in Abhängigkeit von der Höhe der Klemmenspannungen U1 und U2.

Die zweiten Anschlüsse 252, 252a der beiden Gleichspannungszwischenkreise 25 und 25a sind vorzugsweise miteinander kurzgeschlossen und mit dem zweiten Anschluss 42 der elektrischen Last 40 verbunden. Die Anschlüsse 252 und 252a und der Anschluss 42 liegen vorzugsweise auf Masse bzw. Erdpotenzial.

Die elektrische Last 40 kann beispielsweise ein elektrisches Bordnetz 401 umfassen, an das ein oder mehrere elektrische Verbraucher 402 angeschlossen sind. Alternativ kann die elektrische Last 40 auch allein durch einen einzigen elektrischen Verbraucher gebildet sein.

Bei dem Ausführungsbeispiel gemäß Figur 1 weist die Symmetriereinrichtung 30 eine Diode Dl auf, die zwischen Anschlüssen 31 und 33 der Symmetriereinrichtung 30 und damit zwischen den ersten Anschluss 251 des Gleichspannungszwischenkreises 25 und den ersten Anschluss 41 der elektrischen Last 40 geschaltet ist.

Eine zweite Diode D2 der Symmetriereinrichtung 30 ist zwischen die Anschlüsse 32 und 33 der Symmetriereinrichtung 30 geschaltet und verbindet somit den ersten Anschluss 251a des Gleichspannungszwischenkreises 25a des weiteren Traktionszweiges 20a mit dem ersten Anschluss 41 der elektrischen Last 40.

Wie die Figur 1 weiter zeigt, sind die Kathoden der beiden Dioden D1 und D2 miteinander elektrisch verbunden. Beide Dioden D1 und D2 sind dabei jeweils derart gepolt, dass sie von dem ihnen jeweils zugeordneten Traktionszweig 20 bzw. 20a in Richtung der elektrischen Last 40 in Flussrichtung gepolt sind.

Durch die beschriebene Beschaltung der Dioden D1 und D2 innerhalb der Symmetriereinrichtung 30 wird sichergestellt, dass im Falle unterschiedlicher Klemmenspannungen U1 und U2 der Energiespeicher 22 der beiden Traktionszweige 20 und 20a die elektrische Last 40 stets mit der Energie desjenigen Energiespeichers 22 versorgt wird, der die größere Klemmenspannung aufweist. Der Traktionszweig mit der niedrigeren Klemmenspannung wird automatisch abgetrennt.

Die beschriebene Funktionsweise der Symmetriereinrichtung 30 ergibt sich daraus, dass die Dioden Dl und D2 jeweils einen Strom nur in ihrer Flussrichtung führen können, also ein Strom durch die Diode Dl ausschließlich vom Gleichspannungszwischenkreis 25 in Richtung der Last 40 und ein Strom durch die Diode D2 ausschließlich von dem Gleichspannungszwischenkreis 25a in Richtung der elektrischen Last 40 fließen kann, und dies auch nur dann, wenn es die Spannungsverhältnisse an der jeweiligen Diode ermöglichen, also das Potential an der jeweiligen Anode um die erforderliche Flussspannung größer als das Potential an der jeweiligen Kathode ist. Hebt einer der Traktionszweige das Potential am Anschluss 33 zu sehr an, so wird die Diode des jeweils anderen Traktionszweigs gesperrt, weil an ihr keine ausreichende Flussspannung mehr anliegt.

Durch den Einfluss der Dioden D1 und D2 kommt es also dazu, dass stets derjenige Energiespeicher mit der höheren Klemmenspannung zur Versorgung der elektrischen Last 40 herangezogen wird und demgemäß entladen wird, sofern er nicht selbst elektrische Energie erzeugt (wie beispielsweise im Falle einer Brennstoffzelle) oder von anderer Seite (beispielsweise über einen der Stromabnehmer 100 von dem streckenseitigen Energieversorgungsnetz 110 gespeist wird).

Im Falle einer Entladung und einer abfallenden Klemmenspannung unterhalb des Niveaus der Klemmenspannung des jeweils anderen Energiespeichers kommt es durch die selbsttätig arbeitenden Dioden D1 und D2 zu einer automatischen Umkonfiguration, nämlich dergestalt, dass nachfolgend der Strom von dem jeweils anderen Energiespeicher zum Speisen der elektrischen Last 40 herangezogen wird. Dieser Vorgang wiederholt sich, solange die beiden Klemmenspannungen U1 und U2 ungleich groß sind.

Ein wesentlicher Vorteil der Symmetriereinrichtung 30 gemäß Figur 1 besteht auch darin, dass lediglich mit zwei einfachen elektrischen Bauteilen, nämlich den beiden Dioden D1 und D2 sichergestellt wird, dass ein Ausgleichsstrom oder gar Kurzschlussstrom unmittelbar zwischen den beiden Gleichstromzwischenkreisen 25 und 25a unter keinen Umständen fließen kann. Ein Ausgleichsstrom wird nämlich durch die gegensätzlichen Polungen der beiden Dioden D1 und D2 verhindert, so dass die beiden Gleichspannungszwischenkreise 25 und 25a stets entkoppelt sind; der Strom kann jeweils nur in Richtung der elektrischen Last 40 fließen, aber nicht zwischen den Gleichspannungszwischenkreisen 25 und 25a.

Falls das Schienenfahrzeug 10 mehr als zwei Traktionszweige aufweist, so ist es vorteilhaft, für jeden der Traktionszweige jeweils eine eigene Diode vorzusehen und mit der beschriebenen Polarität (also mit Flussrichtung in Richtung der Last 40) zwischen den jeweiligen Traktionszweig und den Anschluss 33 der Symmetriereinrichtung 30 bzw. den ersten Anschluss 41 der elektrischen Last 40 zu schalten; die obigen Ausführungen gelten entsprechend.

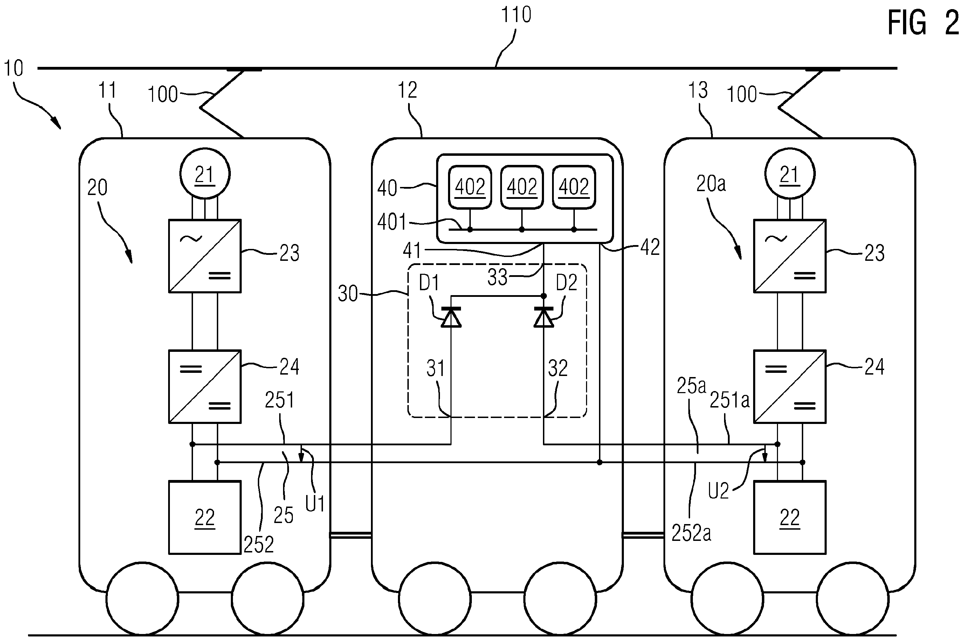

Die Figur 2 zeigt ein Ausführungsbeispiel für ein mehrgliedriges Schienenfahrzeug 10, das zwei oder mehr Wagen, beispielsweise, wie in Figur 2 gezeigt, drei Wagen 11, 12 und 13 aufweist. Bei dem Ausführungsbeispiel gemäß Figur 2 ist einer der Traktionszweige, nämlich der Traktionszweig 20 in dem in der Figur 1 linken bzw. vordersten Wagen 11 und der Traktionszweig 20a in dem in der Figur 2 rechten, letzten Wagen 13 des Schienenfahrzeugs 10 angeordnet. Die elektrische Last 40 und die Symmetriereinrichtung 30 sind in einem mittleren Wagen, in Figur 2 dem Wagen 12, angeordnet.

Es ist also mit anderen Worten möglich, die in der Figur 1 gezeigten Komponenten, nämlich die beiden Traktionszweige 20 und 20a, die elektrische Last 40 und die Symmetriereinrichtung 30 in unterschiedlichen Wagen desselben mehrgliedrigen Schienenfahrzeugs 10 unterzubringen. Die Verteilung der Komponenten auf die Wagen 11 bis 13 ist hier nur beispielhaft zu verstehen; anders als in der Figur 2 gezeigt kann das Schienenfahrzeug 10 auch mehr als drei Wagen aufweisen, in denen mehr als zwei Traktionszweige vorgesehen sind und miteinander eine oder mehrere gemeinsame elektrische Lasten speisen.

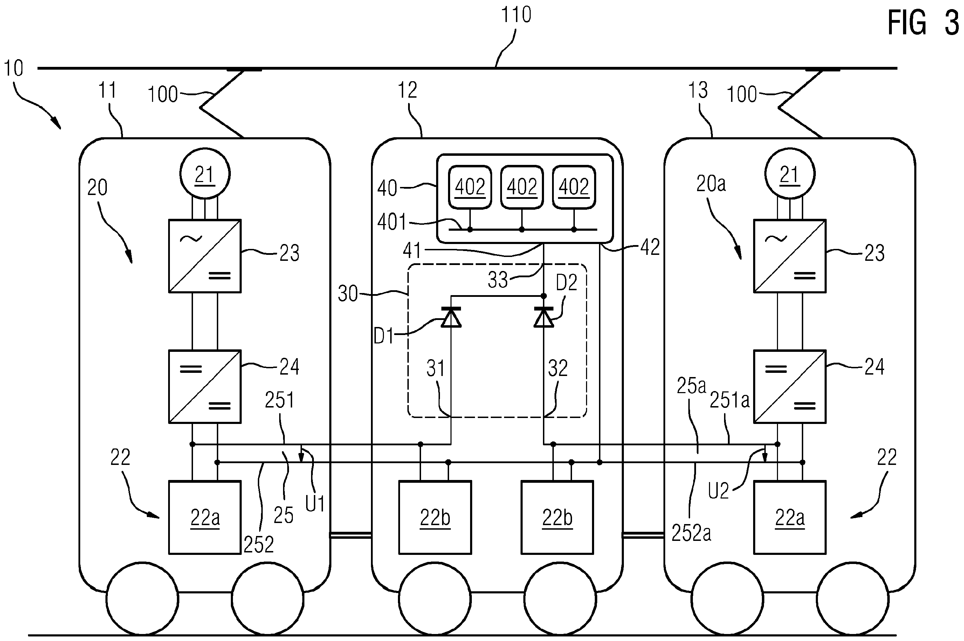

Die Figur 3 zeigt eine Ausführungsvariante des Schienenfahrzeugs 10 gemäß Figur 2. Bei dem Ausführungsbeispiel gemäß Figur 3 weisen die beiden Traktionszweige 20 und 20a jeweils mehrgliedrige Energiespeicher 22 auf, die jeweils zwei oder mehr Subenergiespeicher 22a und 22b umfassen. Die Subenergiespeicher 22a und 22b können dabei in demselben Wagen oder - wie in Figur 3 gezeigt - in unterschiedlichen Wagen des mehrgliedrigen Schienenfahrzeugs 10 angeordnet sein.

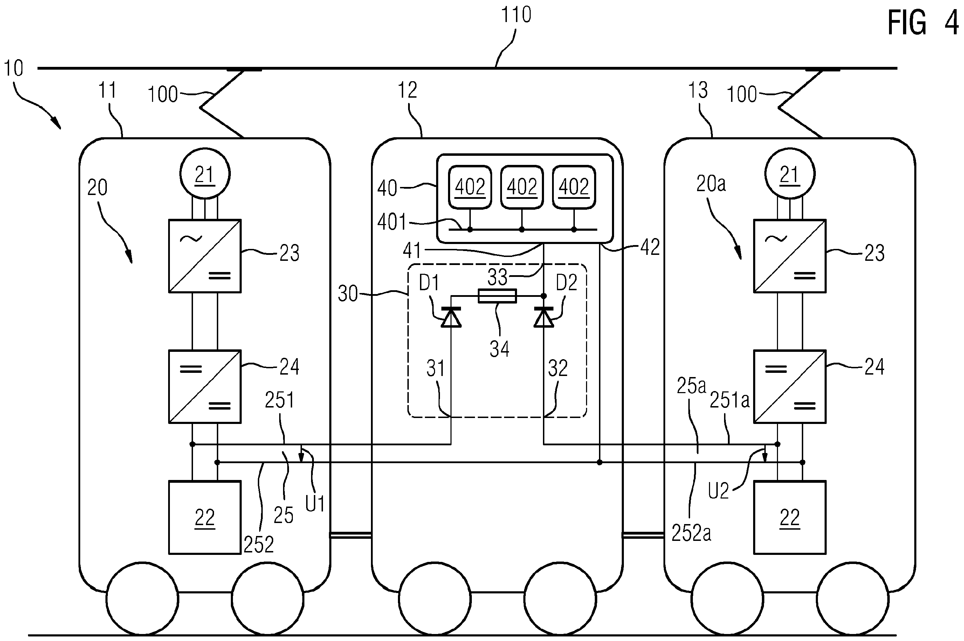

Die Figur 4 zeigt eine Ausführungsvariante des Schienenfahrzeugs 10 gemäß Figur 2. Im Unterschied zu dem Ausführungsbeispiel gemäß Figur 2 weist die Symmetriereinrichtung 30 bei dem Ausführungsbeispiel gemäß Figur 4 eine zusätzliche elektrische Sicherung 34 auf, die zwischen die Kathoden der beiden Dioden Dl und D2 geschaltet ist. Kommt es im Fehlerfall zu einem Ausfall und einem "Durchlegieren" einer der beiden Dioden Dl oder D2, so wird ein eventuell fließender Kurzschlussstrom zwischen den beiden Energiespeichern 22 der beiden Traktionszweige 20 und 20a durch die elektrische Sicherung 34 unterbrochen. Die elektrische Sicherung 34 kann beispielsweise eine Schmelzsicherung oder eine pyrotechnische Sicherung sein.

Falls das Schienenfahrzeug 10 mehr als zwei Traktionszweige aufweist, so ist es vorteilhaft, für jeden der Traktionszweige jeweils eine eigene Diode vorzusehen und mit der beschriebenen Polarität (also mit Flussrichtung in Richtung der Last 40) zwischen den jeweiligen Traktionszweig und den Anschluss 33 der Symmetriereinrichtung 30 bzw. den ersten Anschluss 41 der elektrischen Last 40 zu schalten; jede kathodenseitige Verbindung zwischen jeweils zwei Dioden wird vorzugsweise jeweils mittels einer eigenen elektrischen Sicherung abgesichert; die obigen Ausführungen gelten entsprechend.

Im Übrigen gelten die obigen Ausführungen im Zusammenhang mit der Figur 2 für das Ausführungsbeispiel gemäß Figur 4 entsprechend. Die im Zusammenhang mit der Figur 4 gezeigte Ausführungsform der Symmetriereinrichtung 30 mit einer zusätzlichen elektrischen Sicherung 34 kann im Übrigen auch bei den Schienenfahrzeugen gemäß den Figuren 1 und 3 eingesetzt werden; diesbezüglich gelten die obigen Ausführungen im Zusammenhang mit den Figuren 1 und 3 entsprechend.

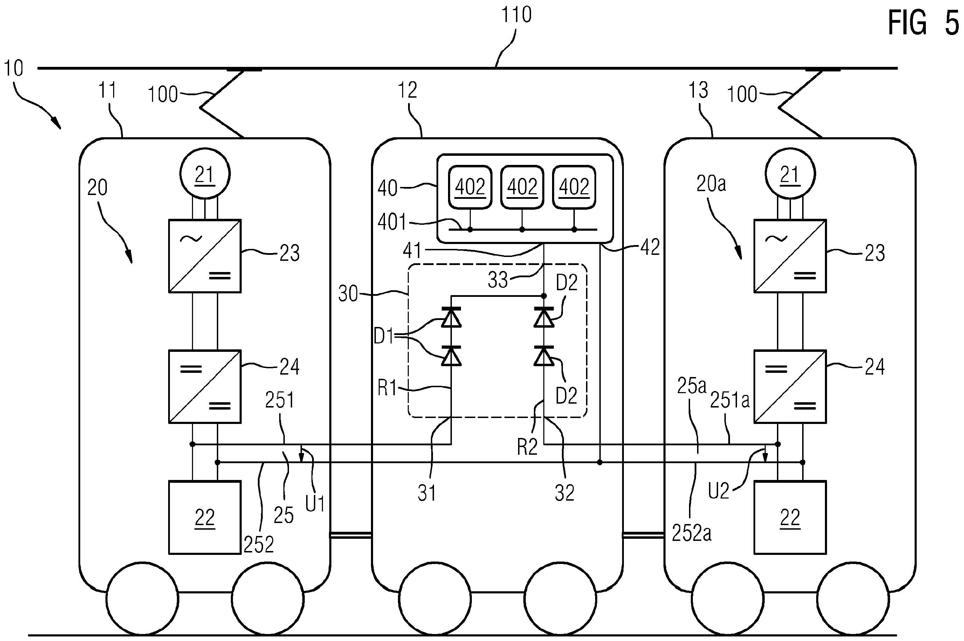

Die Figur 5 zeigt eine weitere Ausführungsvariante des Schienenfahrzeugs 10 gemäß Figur 2. Bei dem Ausführungsbeispiel gemäß Figur 5 weist die Symmetriereinrichtung 30 zwischen jedem der zwei Traktionszweige 20 und 20a und der elektrischen Last 40 jeweils eine Diodenreihenschaltung Rl bzw. R2 auf, die zumindest zwei in Reihe geschaltete Dioden Dl bzw. D2 umfasst und vom jeweiligen Traktionszweig 20 bzw. 20a in Richtung elektrischer Last 40 gesehen in Flussrichtung gepolt ist.

Kommt es zu einem Versagen einer Diode in einer der Diodenreihenschaltungen, so kann die jeweils andere Diode der jeweiligen Diodenreihenschaltung die entsprechende Sperrwirkung weiterhin gewährleisten, sodass die im Zusammenhang mit der Figur 2 beschriebene Trennung der Gleichspannungszwischenkreise 25 und 25a auch bei Ausfall einer Diode pro Diodenreihenschaltung noch gewährleistet bleibt.

Falls das Schienenfahrzeug 10 mehr als zwei Traktionszweige aufweist, so ist es vorteilhaft, für jeden der Traktionszweige jeweils eine eigene Diodenreihenschaltung vorzusehen und mit der beschriebenen Polarität (also mit Flussrichtung in Richtung der Last 40) zwischen den jeweiligen Traktionszweig und den Anschluss 33 der Symmetriereinrichtung 30 bzw. den ersten Anschluss 41 der elektrischen Last 40 zu schalten; die obigen Ausführungen gelten entsprechend.

Die im Zusammenhang mit der Figur 5 gezeigte Ausführungsform der Symmetriereinrichtung 30 mit Diodenreihenschaltungen kann im Übrigen auch bei den Schienenfahrzeugen gemäß den Figuren 1 und 3 eingesetzt werden; diesbezüglich gelten die obigen Ausführungen im Zusammenhang mit den Figuren 1 und 3 entsprechend. Auch können eine elektrische Sicherung 34, wie im Zusammenhang mit der Figur 4 gezeigt, oder mehrere Sicherungen im Falle von mehr als zwei Traktionszweigen und mehr als zwei Diodenreihenschaltungen zusätzlich vorgesehen werden.

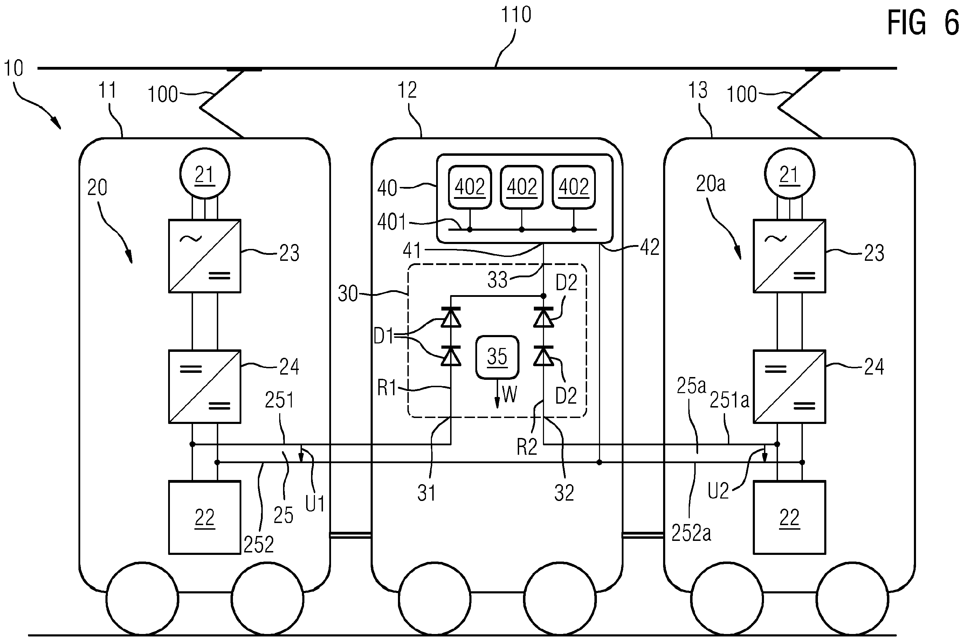

Die Figur 6 zeigt eine Ausführungsvariante des Ausführungsbeispiels gemäß Figur 5. Bei dem Ausführungsbeispiel gemäß Figur 6 weist die Symmetriereinrichtung 30 zusätzlich eine Überwachungseinrichtung 35 auf, die im Falle eines Versagens einer der Dioden Dl bzw. D2 der Diodenreihenschaltungen ein Warnsignal W erzeugt. Liegt ein solches Warnsignal W vor, so kann Wartungspersonal einen Austausch der vom Ausfall betroffenen Diode vornehmen. Die Überwachungseinrichtung 35 misst vorzugsweise die Diodenströme und Diodenspannungen und erzeugt das Warnsignal, wenn bei zumindest einer der Dioden im Falle eines Stromflusses über einer vorgegebenen Stromflussschwelle die anliegende Spannung (Flussspannung) untypisch klein bzw. kleiner als eine der Stromflussschwelle zugeordnete Spannungsschwelle ist.

Im Übrigen gelten die obigen Ausführungen im Zusammenhang mit der Figur 5 bei dem Ausführungsbeispiel gemäß Figur 6 entsprechend. Auch kann die im Zusammenhang mit der Figur 6 gezeigte Ausführungsform der Symmetriereinrichtung 30 mit Überwachungseinrichtung 35 bei den Schienenfahrzeugen gemäß den Figuren 1 und 3 eingesetzt werden; diesbezüglich gelten die obigen Ausführungen im Zusammenhang mit den Figuren 1 und 3 entsprechend.

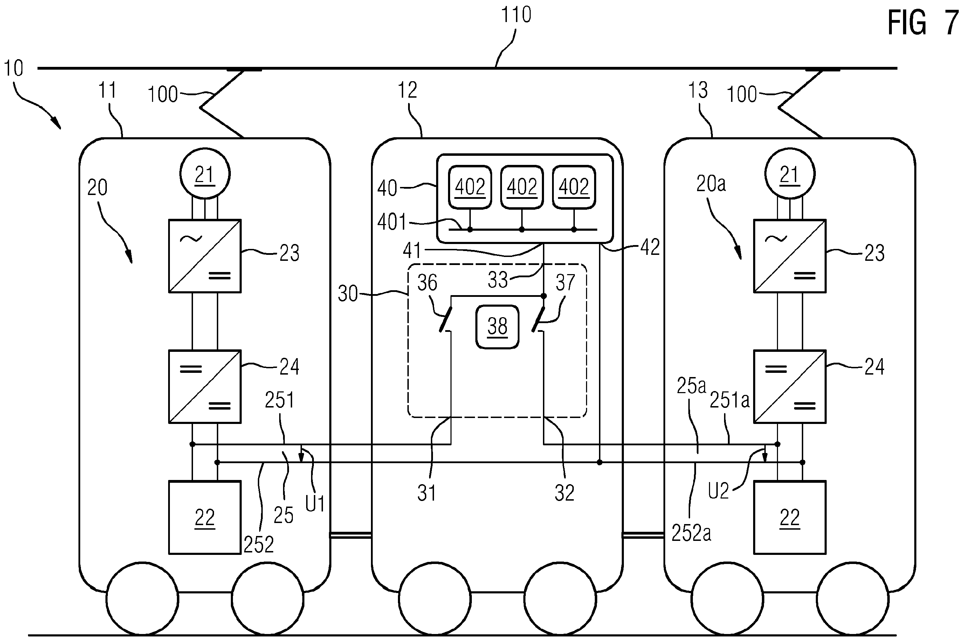

Die Figur 7 zeigt anhand des Schienenfahrzeugs 10 gemäß Figur 2 eine weitere Variante für die Ausgestaltung einer Symmetriereinrichtung 30. Bei dem Ausführungsbeispiel gemäß Figur 7 weist die Symmetriereinrichtung 30 zwei Schalter 36 und 37 auf, die mittels einer Steuereinrichtung 38 komplementär zueinander ein- bzw. ausgeschaltet werden. Zu jedem Zeitpunkt ist jeweils nur einer der beiden Schalter eingeschaltet; der jeweils andere ist ausgeschaltet. Das Umschalten der beiden Schalter erfolgt in Abhängigkeit von den Klemmenspannungen U1 und U2 in den Gleichspannungszwischenkreisen 25 und 25a, und zwar jeweils derart, dass die größere der beiden Klemmenspannungen U1 bzw. U2 zur Speisung der elektrischen Last 40 herangezogen wird.

Falls das Schienenfahrzeug 10 mehr als zwei Traktionszweige aufweist, so ist es vorteilhaft, für jeden der Traktionszweige jeweils einen eigene Schalter vorzusehen und mit der beschriebenen Verschaltung zwischen den jeweiligen Traktionszweig und den Anschluss 33 der Symmetriereinrichtung 30 bzw. den ersten Anschluss 41 der elektrischen Last 40 zu schalten; die obigen Ausführungen gelten entsprechend.

Im Übrigen gelten die obigen Ausführungen im Zusammenhang mit den Ausführungsbeispielen gemäß den Figuren 1 bis 6 bei dem Ausführungsbeispiel gemäß Figur 7 entsprechend. Auch kann die im Zusammenhang mit der Figur 7 gezeigte Ausführungsform der Symmetriereinrichtung 30 mit zwei oder mehr Schaltern 36 und 37 und der Steuereinrichtung 38 bei den Schienenfahrzeugen gemäß den Figuren 1 bis 6 eingesetzt werden; diesbezüglich gelten die obigen Ausführungen im Zusammenhang mit den Figuren 1 bis 6 entsprechend.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 10: Schienenfahrzeug
- 11: Wagen
- 12: Wagen
- 13: Wagen
- 20: Traktionszweig
- 20a: Traktionszweig
- 21: Antrieb
- 22: Energiespeicher
- 22a: Subenergiespeicher
- 22b: Subenergiespeicher
- 23: Wechselrichter
- 24: DC/DC-Wandler
- 25: Gleichspannungszwischenkreis
- 25a: weiterer Gleichspannungszwischenkreis
- 30: Symmetriereinrichtung
- 31: Anschluss
- 32: Anschluss
- 33: Anschluss
- 34: elektrische Sicherung
- 35: Überwachungseinrichtung
- 36: Schalter
- 37: Schalter
- 38: Steuereinrichtung
- 40: elektrische Last
- 41: Anschluss
- 42: Anschluss
- 100: Stromabnehmer
- 110: Energieversorgungsnetz
- 251: erster Anschluss
- 251a: erster Anschluss
- 252: zweiter Anschluss
- 252a: zweiter Anschluss
- 401: elektrisches Bordnetz
- 402: elektrische Verbraucher

- D1: Diode
- D2: Diode
- R1: Diodenreihenschaltung
- R2: Diodenreihenschaltung
- U1: Klemmenspannung
- U2: Klemmenspannung
- W: Warnsignal

## Patentansprüche

1. Fahrzeug, insbesondere Schienenfahrzeug (10), mit zumindest zwei Traktionszweigen (20, 20a), die jeweils einen Antrieb (21) und einen Energiespeicher (22) umfassen, und zumindest einer elektrischen Last (40),
**dadurch gekennzeichnet, dass**
- die zumindest eine elektrische Last (40) mit den Energiespeichern (22) der zumindest zwei Traktionszweige (20, 20a) über eine elektrische Symmetriereinrichtung (30) verbunden ist,
- wobei die Symmetriereinrichtung (30) derart ausgestaltet ist, dass sie im Falle unterschiedlicher Klemmenspannungen (U1, U2) der Energiespeicher (22) der zumindest zwei Traktionszweige (20, 20a) die elektrische Last (40) mit einem der zumindest zwei Traktionszweige (20, 20a) verbindet und von dem anderen der zumindest zwei Traktionszweige (20, 20a) trennt sowie Ausgleichsströme zwischen den zumindest zwei Traktionszweigen (20, 20a) unterbindet.

2. Fahrzeug nach Anspruch 1,
**dadurch gekennzeichnet, dass**
- die Symmetriereinrichtung (30) im Falle unterschiedlicher Klemmenspannungen (U1, U2) der Energiespeicher (22) der zumindest zwei Traktionszweige (20, 20a) die elektrische Last (40) mit der Energie desjenigen Energiespeichers (22) versorgt, der die größte Klemmenspannung (U1, U2) von den Energiespeichern (22) der zumindest zwei Traktionszweige (20, 20a) aufweist, und
- im Falle einer gleichgroßen Klemmenspannung (U1, U2) der Energiespeicher (22) der zumindest zwei Traktionszweige (20, 20a) die elektrische Last (40) parallel mit der Energie der Energiespeicher (22) jedes der genannten zumindest zwei Traktionszweige (20, 20a) versorgt.

3. Fahrzeug nach einem der voranstehenden Ansprüche,
**dadurch gekennzeichnet, dass** die Symmetriereinrichtung (30) eine passive, selbsttätig arbeitende Symmetriereinrichtung (30) ist.

4. Fahrzeug nach einem der voranstehenden Ansprüche,
**dadurch gekennzeichnet, dass** die Symmetriereinrichtung (30) zwischen jedem der zumindest zwei Traktionszweige (20, 20a) und der elektrischen Last (40) jeweils zumindest eine Diode (D1, D2) aufweist, die vom Traktionszweig (20, 20a) in Richtung Last (40) gesehen in Flussrichtung gepolt ist.

5. Fahrzeug nach einem der voranstehenden Ansprüche,
**dadurch gekennzeichnet, dass** die Kathoden der Dioden (D1, D2) elektrisch verbunden sind.

6. Fahrzeug nach einem der voranstehenden Ansprüche,
**dadurch gekennzeichnet, dass** zwischen jedem Paar miteinander verbundener Kathoden jeweils zumindest eine elektrische Sicherung (34) angeordnet ist.

7. Fahrzeug nach einem der voranstehenden Ansprüche,
**dadurch gekennzeichnet, dass** die Symmetriereinrichtung (30) zwischen jedem der zumindest zwei Traktionszweige (20, 20a) und der elektrischen Last (40) jeweils eine Diodenreihenschaltung (R1, R2) aufweist, die zumindest zwei in Reihe geschaltete Dioden (D1, D2) aufweist und vom jeweiligen Traktionszweig (20, 20a) in Richtung Last (40) gesehen in Flussrichtung gepolt ist.

8. Fahrzeug nach einem der voranstehenden Ansprüche,
**dadurch gekennzeichnet, dass** die Symmetriereinrichtung (30) eine Überwachungseinrichtung (35) aufweist, die im Falle eines Versagens einer der Dioden (D1, D2) der Diodenreihenschaltungen (R1, R2) ein Warnsignal (W) erzeugt.

9. Fahrzeug nach einem der voranstehenden Ansprüche,
**dadurch gekennzeichnet, dass** die Symmetriereinrichtung (30) umfasst:
- für jeden der zumindest zwei Traktionszweige (20, 20a) jeweils einen Schalter (36, 37), der in geschlossener Schalterstellung den zugeordneten Traktionszweig (20, 20a) mit der elektrischen Last (40) verbindet und in offener Schalterstellung von dieser trennt, und
- eine Steuereinrichtung (38), die die Schalterstellung der Schalter (36, 37) in Abhängigkeit von den Klemmenspannungen (U1, U2) der Energiespeicher (22) steuert.

10. Fahrzeug nach Anspruch 9,
**dadurch gekennzeichnet, dass** die Steuereinrichtung die Schalterstellung der Schalter (36, 37) derart steuert, dass im Falle einer unterschiedlichen Klemmenspannung (U1, U2) der Energiespeicher (22) der zumindest zwei Traktionszweige (20, 20a) durch Umschalten der Schalter (36, 37) die elektrische Last (40) mit demjenigen Energiespeicher (22) verbunden wird, der die größte Klemmenspannung (U1, U2) von den Energiespeichern (22) der zumindest zwei Traktionszweige (20, 20a) aufweist.

11. Fahrzeug nach einem der voranstehenden Ansprüche 9 bis 10,
**dadurch gekennzeichnet, dass** die Steuereinrichtung (38) die Schalterstellung der Schalter (36, 37) derart steuert, dass im Falle einer gleichgroßen Klemmenspannung (U1, U2) der Energiespeicher (22) der zumindest zwei Traktionszweige (20, 20a) durch Einschalten zweier oder mehr Schalter (36, 37) der Symmetriereinrichtung (30) die elektrische Last (40) parallel mit dem Energiespeicher (22) jedes der genannten zumindest zwei Traktionszweige (20, 20a) verbunden wird.

12. Fahrzeug nach einem der voranstehenden Ansprüche,
**dadurch gekennzeichnet, dass** die elektrische Last (40) zwei oder mehr elektrische Verbraucher (402) aufweist oder durch zwei oder mehr elektrische Verbraucher (402) gebildet ist.

13. Fahrzeug nach einem der voranstehenden Ansprüche,
**dadurch gekennzeichnet, dass** die elektrische Last (40) ein elektrisches Bordnetz (401) umfasst, an das ein oder mehr elektrische Verbraucher (402) angeschlossen sind.

14. Fahrzeug nach einem der voranstehenden Ansprüche,
**dadurch gekennzeichnet, dass** der Energiespeicher (22) eines oder mehrerer der Traktionszweige (20, 20a) zwei oder mehr Subenergiespeicher (22a, 22b) umfasst.

15. Fahrzeug nach einem der voranstehenden Ansprüche,
**dadurch gekennzeichnet, dass** das Fahrzeug mehrgliedrig ist und zwei oder mehr Wagen (11-13) umfasst, wobei
- die zumindest zwei Traktionszweige (20, 20a) in unterschiedlichen Wagen (11-13) des Fahrzeugs untergebracht sind und/oder
- der Energiespeicher (22) eines oder mehrerer der Traktionszweige (20, 20a) zwei oder mehr Subenergiespeicher (22a, 22b) umfasst, die in unterschiedlichen Wagen (11-13) des Fahrzeugs untergebracht sind, und/oder
- einer der zumindest zwei Traktionszweige (20, 20a) im vordersten Wagen (11) oder zumindest auch im vordersten Wagen (11) untergebracht ist und/oder
- ein anderer der zumindest zwei Traktionszweige (20, 20a) im hintersten Wagen (13) oder zumindest auch im hintersten Wagen (13) untergebracht ist und/oder
- die elektrische Last (40) in einem oder mehreren der mittleren Wagen (12) oder zumindest auch in einem oder mehreren der mittleren Wagen (12) angeordnet ist.
